# EUROPÄISCHE PATENTSCHRIFT

(11) **EP 3 672 923 B1**
(45) Veröffentlichungstag und Bekanntmachung des Hinweises auf die Patenterteilung: **19.10.2022**
(21) Anmeldenummer: 18752153.9
(22) Anmeldetag: 10.08.2018
(51) Int. Cl.: C04B 28/02, C04B 28/04, C04B 28/10, C04B 28/14, C04B 38/10

(54) **HYBRIDSCHAUM**
HYBRID FOAM
MOUSSE HYBRIDE

(30) Priorität: 23.08.2017 EP 17187564
(43) Veröffentlichungstag der Anmeldung: 01.07.2020
(73) Patentinhaber: BASF SE, 67056 Ludwigshafen am Rhein (DE)
(72) Erfinder: JAHNS, Ekkehard, 67056 Ludwigshafen (DE); NIEDERMAIR, Fabian, 83308 Trostberg (DE); CENTNER, Alexander, 67056 Ludwigshafen (DE); DAXENBERGER, Georg, 83308 Trostberg (DE)
(74) Vertreter: BASF IP Association
(86) Internationale Anmeldenummer: PCT/EP2018/071735
(87) Internationale Veröffentlichungsnummer: WO 2019/038105

(56) Entgegenhaltungen:
- EP-A1- 1 180 535
- WO-A1-01/70647
- WO-A1-2011/073246
- WO-A2-2008/007187
- DE-A1- 4 318 033

## Beschreibung

Die vorliegende Erfindung betrifft einen Hybridschaum, ein Verfahren zur Herstellung eines Hybridschaums und einen Hybridschaum, der nach diesem Verfahren erhältlich ist, und die Verwendung der erfindungsgemäßen Hybridschäume zum Kleben, Füllen und/oder Dämmen.

Zementäre Schäume haben in der Bauindustrie zahlreiche Anwendungsgebiete, beispielsweise als Dämmmaterial.

Zementäre Schäume weisen jedoch aufgrund ihrer Sprödigkeit keine ausreichenden Festigkeits- und Klebeeigenschaften auf. Daher sind zementäre Schäume gefragt, die verbesserte Festigkeits- und Klebeeigenschaften aufweisen.

WO 01/70647 beschreibt ein Verfahren zur Herstellung eines hydraulischen Bindemittelschaums. Ein wässriger Schaum wird aus Wasser und einem Schaumbildner hergestellt, wobei der Schaumbildner ein hydrophiles Polymer umfasst, das in Wasser löslich, mischbar oder dispergierbar ist, vorzugsweise Polyvinylalkohol. Der wässrige Schaum wird mit einem hydraulischen Bindemittel in feinteiliger Trocken parti kelform gemischt, um den hydraulischen Bindemittelschaum zu erzeugen. Der hydraulische Bindemittelschaum kann dann zu einer gewünschten Form geformt werden, und das hydraulische Bindemittel wird ausgehärtet, um das fertige Produkt zu ergeben.

US 4,137,198 beschreibt einen Polymer-anorganischen Hybridschaum, der als Baustoff verwendbar ist und der eine kontinuierliche plastischen Phase oder eine Grundgerüststruktur aus nicht expandiertem Polymer, z.B. Polyvinylacetat, Vinyl-Acryl-Copolymer oder Asphalt oder Bitumen-Pech, enthält, wobei darin Teilchen einer anorganischen Phase wie Portland-Zement-Partikel verteilt sind, wobei diese anorganische Phase im Wesentlichen frei von Sand, Gestein oder Zuschlag ist.

US 6,586,483 betrifft schäumende Zusammensetzungen, die oberflächenmodifizierte Nanopartikel einschließen.

US 8,124,662 betrifft ein geschäumtes Polymer-anorganisches Bindemittel mit kontrollierter Dichte und Morphologie, insbesondere ein geschäumtes Polyurethan-anorganisches Bindemittel, ein Verfahren zur Herstellung desselben und seine Verwendung.

Guochen Sang et al. beschreiben zementären Schäume, die mit einem Ethylen-Vinylacetat-Copolymer modifiziert sind.

Die im Stand der Technik beschriebenen geschäumten Bindemittel liefern jedoch keine Lösung, um die Sprödigkeit von zementären Schäumen zu senken und zugleich die Festigkeits- und Klebeeigenschaften zu verbessern.

Es war daher die Aufgabe der vorliegenden Erfindung Hybridschäume mit geringerer Sprödigkeit und verbesserten Festigkeits- und Klebeeigenschaften bereitzustellen.

Diese Aufgabe wird gelöst durch einen erfindungsgemäßen Hybridschaum enthaltend
- mindestens ein mineralisches Bindemittel;
- mindestens ein Styrol-Acrylat-Copolymer;
- mindestens eine grenzflächenaktive Substanz ausgewählt aus der Gruppe bestehend aus C8-C18-Alkylsulfaten, C8-C18-Alkylethersulfaten, C8-C18-Alkylsulfonaten, C8-C18-Alkylbenzolsulfonaten, C8-C18-α-Olefinsulfonaten, C8-C18-Sulfosuccinaten, α-Sulfo-C8-C18-fettsäuredisalzen, C8-C18-Fettsäuresalzen, C8-C18-Fettalkoholethoxylaten, Blockcopolymeren aus Ethylenoxid und Propylenoxid, C8-C18-Alkylpolyglycosiden und Mischungen daraus;
- mindestens einen Verdicker;
- optional mindestens ein weiteres Additiv; und
- Wasser.

Es wurde überraschend herausgefunden, dass ein Hybridschaum, der neben mindestens einem mineralischen Bindemittel mindestens ein Polymer enthaltend Monomer-Einheiten, die sich aus mindestens einem ethylenisch ungesättigten Monomer oder aus einer Kombination aus Polyisocyanaten und Polyolen und/oder Polyaminen ergeben, sowie mindestens eine grenzflächenaktive Substanz enthält, eine verringerte Sprödigkeit und verbesserte Festigkeits- und Klebeeigenschaften aufweist. Der Polymeranteil im Hybridschaum ist vermutlich für die verringerte Sprödigkeit verantwortlich. Weiterhin wird angenommen, dass durch das im Hybridschaum enthaltene mindestens eine Polymer Energie absorbiert werden kann und dadurch höhere Festigkeiten, wie beispielsweise eine höhere Schlagfestigkeit, erreicht werden kann. Der in dem Hybridschaum enthaltene mindestens eine Verdicker, beispielsweise ein Celluloseether, führt zu einer Viskositätseröhung des Wassers und damit der Mörtelmischung. Zudem verlangsamt der Verdicker die Drainage des geschäumten Mörtels und verbessert die Wasserrückhaltung im System. Grundsätzlich führt eine Addltivierung mit Verdickern zu einer erhöhten Standfestigkeit.

Weiterhin betrifft die vorliegende Erfindung ein Verfahren zur Herstellung eines Hybridschaums. Hierbei wird zunächst eine Mischung enthaltend mindestens ein mineralisches Bindemittel, mindestens ein Styrol-Acrylat-Copolymer und Wasser hergestellt. Diese Mischung wird anschließend mit einem wässrigen Schaum enthaltend Wasser und eine grenzflächenaktive Substanz ausgewählt aus der Gruppe bestehend aus C8-C18-Alkylsulfaten; C8-C18-Alkylethersulfaten, C8-C18-Alkylsulfonaten, C8-C18-Alkylbenzolsulfonaten, C8-C18-α-Olefinsulfonaten, C8-C18-Sulfosuccinaten, α-Sulfo-C8-C18-fettsäuredisalzen, C8-C18-Fettsäuresalzen, C8-C18-Fettalkoholethoxylaten, Blockcopolymeren aus Ethylenoxid und Propylenoxid, C8-C18-Alkylpolyglycosiden und Mischungen daraus gemischt, wodurch der erfindungsgemäße Hybridschaum erhalten wird. Optional wird anschließend der erhaltene Hybridschaum ausgehärtet. Es wird angenommen, dass durch das Vorlegen einer Mischung enthaltend das Bindemittel, Polymer und Wasser und das anschließende Mischen (Unterheben) mit einem wässrigen Schaum ein besonders homogener Hybridschaum erhalten wird. Damit wird gewährleistet, dass die verbesserten Eigenschaften, nämlich verringerte Sprödigkeit und verbesserte Festigkeits- und Klebeeigenschaften, homogen im gesamten Hybridschaum erzeugt werden. Des Weiteren wird durch das Unterheben des Schaums gewährleistet, dass dieser bei entsprechend angepasster Scherrate zerstörungsfrei und homogen in die vorgelegte Mischung, welche das Bindemittel, Polymer und Wasser enthält, eingebracht werden kann.

Weiterhin betrifft die vorliegende Erfindung einen Hybridschaum erhältlich nach dem erfindungsgemäßen Verfahren. Aufgrund der durch das Verfahren erhaltenen strukturellen Eigenschaften sowie seiner Bestandteile zeichnet sich der Hybridschaum durch eine geringe Sprödigkeit und verbesserte Festigkeits- und Klebeeigenschaften aus. Bevorzugt wird dem nach dem erfindungsgemäßen Verfahren erhaltenen Hybridschaum noch ein Verdicker zugesetzt, um die Festigkeitseigenschaften des Hybridschaums weiter zu verbessern.

Weiterhin betrifft die vorliegende Erfindung die Verwendung eines erfindungsgemäßen Hybridschaums zum Kleben, Füllen und/oder Dämmen.

Die Erfindung wird nachfolgend näher beschrieben. In diesem Zusammenhang sind die folgenden Begriffe von Bedeutung.

Der Begriff "Gew,»%" (auch Massenanteil genannt) bezeichnet den Prozent-Anteil der jeweiligen Komponente im Verhältnis zur Summe aller Komponenten gemessen am Gewicht, sofern keine andere Basis angegeben ist. Der Begriff "Vol-%" bezeichnet den Prozent-Anteil der jeweiligen Komponente im Verhältnis zur Summe aller Komponenten gemessen am Volumen, sofern keine andere Basis angegeben ist. Des Weiteren ist die Summe aller Prozentangaben der spezifizierten und unspezifizierten Komponenten einer Zusammensetzung immer 100 %.

Der Begriff "umfassend" bedeutet, dass neben den spezifisch genannten Merkmalen noch weitere, nicht spezifisch genannte Merkmale vorliegen können. Ebenso ist der Begriff "enthaltend" zu verstehen. Der Begriff "bestehend aus" bedeutet, dass nur die spezifisch genannten Merkmale enthalten sind.

Die bevorzugten Ausführungsformen der Erfindung werden nachfolgend erläutert. Die bevorzugten Ausführungsformen sind allein und in Kombination miteinander bevorzugt.

Wie bereits oben erwähnt betrifft die Erfindung einen Hybridschaum enthaltend
- mindestens ein mineralisches Bindemittel;
- mindestens ein Styrol-Acrylat-Copolymer;
- mindestens eine grenzflächenaktive Substanz ausgewählt aus der Gruppe bestehend aus C8-C18-Alkylsulfaten, C8-C18-Alkylethersulfaten, C8-C18-Alkylsulfonaten, C8-C18-Alkylbenzolsulfonaten, C8-C18-α-Olefinsulfonaten, C8-C18-Sulfosuccinaten, α-Sulfo-C8-C18-fettsäuredisalzen, C8-C18-Fettsäuresalzen, C8-C18-Fettalkoholethoxylaten, Blockcopolymeren aus Ethylenoxid und Propylenoxid, C8-C18-Alkylpolyglycosiden und Mischungen daraus;
- mindestens einen Verdicker;
- optional mindestens ein weiteres Additiv; und
- Wasser.

Es hat sich überraschend gezeigt, dass durch den Einsatz von Styral-Acrylat-Copolymers besonders gute Haftzugwerte erzielt werden können.

In einer weiteren Ausführungsform enthält der Hybridschaum
- mindestens ein mineralisches Bindemittel;
- mindestens ein Polymer enthaltend Monomer-Einheiten, die sich aus mindestens einem ethylenisch ungesättigten Monomer oder aus einer Kombination aus Polyisocyanaten und Polyolen und/oder Polyaminen ergeben;
- mindestens eine grenzflächenaktive Substanz;
- mindestens einen Celluloseether;
- optional mindestens ein weiteres Additiv; und
- Wasser.

Der Einsatz von Celluloseethern ist vorteilhaft in Bezug auf die Druckfestigkeit.

In einer weiteren Ausführungsform enthält der Hybridschaum
- mindestens ein mineralisches Bindemittel;
- mindestens ein Styrol-Acrylat-Copolymer;
- mindestens eine grenzflächenaktive Substanz;
- mindestens einen Celluloseether;
- optional mindestens ein weiteres Additiv; und
- Wasser.

Unter Hybridschaum ist erfindungsgemäß ein Schaum zu verstehen, der sowohl mindestens ein mineralisches Bindemittel, als auch mindestens ein Polymer enthält.

Die erfindungsgemäßen Hybridschäume sind zwei- bzw. dreiphasige Systeme, wobei eine Phase gasförmig ist und eine Phase fest ist und optional eine Phase flüssig ist. Die gasförmige Phase liegt als feine Gasblasen vor, die durch Zellwände getrennt sind, die aus den flüssigen und festen Phasen erhalten wurden. Die Zellwände treffen sich an Kanten, die sich wiederum an Knotenpunkten treffen, wodurch ein Gerüst gebildet wird. Der Gehalt der gasförmigen Phase im Hybridschaum kann in einem Bereich von 20 bis 99% oder 20 bis 98 Vol.-%, vorzugsweise von 50 bis 98 Vol.-% variieren. Die flüssige Phase ist vorzugsweise eine wässrige Phase, so dass der Hybridschaum typischerweise auch Wasser enthält. Jedoch liegt das Wasser nach dem Aushärten als Hydrat vor, wurde also durch das mineralische Bindemittel gebunden. Das verbleibende Wasser ist vorzugsweise nach einem Trocknungsschritt nicht mehr vorhanden, so dass im ausgehärteten Hybridschaum vorzugsweise lediglich die Gasphase und die feste Phase verbleibt, wobei diese feste Phase dann die zuvor erwähnten Zellwände bildet. Die feste Phase eines erfindungsgemäßen Hybridschaums umfasst mindestens ein mineralisches Bindemittel und mindestens ein Polymer, enthaltend Monomer-Einheiten, die sich aus mindestens einem ethylenisch ungesättigten Monomer oder aus einer Kombination aus Polyisocyanaten und Polyolen und/oder Polyaminen ergeben. Feste bzw. ausgehärtete Hybridschäume, die typischerweise nach einem Trocknungsschritt erhalten werden, können offenzellige Schäume oder geschlossenzellige Schäume sein. Bei geschlossenzelligen Schaumstoffen ist das Gas vollständig von der Zellwand umgeben. Typischerweise sind bei der gleichen Dichte geschlossenzellige Schäume robuster als offenzellige Schäume. Dementsprechend werden geschlossenzellige Schäume aufgrund ihrer verbesserten mechanischen Stabilität bevorzugt.

Die im Schaum enthaltene Gasphase kann durch mechanisches, physikalisches oder chemisches Schäumen eingebracht werden. Nicht beschränkende Beispiele für Gase umfassen Luft, Stickstoff, Edelgas, Kohlendioxid, Kohlenwasserstoffe und Mischungen davon.

Die im Schaum vorhandene Gasphase kann durch mechanisches Schäumen in Gegenwart des jeweiligen Gases eingebracht werden. Das mechanische Schäumen kann unter Verwendung eines Küchenmischers oder durch einen oszillierenden Prozess oder durch ein Stator-Rotor-Verfahren erfolgen.

Die Gasphase kann auch durch physikalisches oder chemisches Schäumen in den Schaum eingebracht werden, wobei das physikalische oder chemische Schaumverfahren geeignet ist, um ein Gas freizusetzen. Vorzugsweise werden Treibmittel verwendet, die mit Wasser und/oder einer Säure reagieren oder sich zersetzen, um das Gas freizusetzen. Nicht beschränkende Beispiele für Treibmittel sind Peroxide wie Wasserstoffperoxid, Dibenzoylperoxid, Peroxobenzoesäure, Peroxoessigsäure, Alkalimetallperoxide, Perchlorsäure, Peroxomonosulfonsäure, Dicumylperoxid oder Cumylhydroperoxid; Isocyanate; Carbonate und Bicarbonate wie CaCO₃, Na₂CO₃ und NaHCO₃, die vorzugsweise in Kombination mit einer Säure, z. B. einer Mineralsäure eingesetzt werden; Metallpulver wie Aluminiumpulver; Azide wie Methylazid; Hydrazide wie p-Toluolsulfonylhydrazid; oder Hydrazin.

Das Schäumen durch ein Treibmittel kann durch die Verwendung eines Katalysators unterstützt werden. Geeignete Katalysatoren umfassen vorzugsweise Mn²⁺-, Mn⁴⁺-, Mn¹⁺- oder Fe³⁴-Kationen. Alternativ kann das Enzym Katalase als Katalysator verwendet werden. Nicht beschränkende Beispiele für geeignete Katalysatoren sind MnO₂ und KMnO₄. Solche Katalysatoren werden vorzugsweise in Kombination mit Peroxid-Treibmitteln eingesetzt.

Der Begriff "Wasser", wie er hierin verwendet wird, kann sich auf reines, deionisiertes Wasser oder auf Wasser mit bis zu 0,1 Gew.-% Verunreinigungen und/oder Salzen, wie normales Leitungswasser, beziehen.

Mineralische Bindemittel sind anorganische Verbindungen, die in einer wässrigen Umgebung (hydraulisch) oder in Gegenwart von Luft (nicht-hydraulisch) härten. Zu den hydraulischen Bindemitteln zählen unter anderem Zement, hydraulischer Kalk, Trass und Puzzolane. Zu den nicht-hydraulischen Bindemitteln zählen unter anderem Gips, Luftkalk, Magnesiabinder und Lehm. Mineralische Bindemittel umfassen auch latent hydraulische Bindemittel wie Mikrosilika, Metakaolin, Alumosilikate, Flugaschen, aktivierter Ton, Puzzolane oder Mischungen daraus. Ein latent hydraulisches Bindemittel wird erst in Anwesenheit eines basischen Aktivators hydraulisch. Das alkalische Medium zur Aktivierung der Bindemittel umfasst üblicherweise wässrige Lösungen von Alkalimetailcarbonaten, Alkalimetallfluoriden, Alkalimetallhydroxiden, Alkalimetallaluminaten und/oder Alkalimetallsilikaten wie z.B. löslichem Wasserglas.

Zement ist ein anorganisches, fein gemahlenes hydraulisches Bindemittel. Die unterschiedlichen Zementarten werden gemäß DIN EN 197-1 (11/2011) in die Kategorien CEM I-V klassifiziert. Der Begriff "Zement" umfasst auch Calcium-Aluminat-Zemente, Calcium-Sulfo-Aluminat Zemente (CSA-Zemente) und Mischungen davon.

CEM I Zement, auch Portlandzement genannt, enthält etwa 70 Gew.-% CaO und MgO, etwa 20 Gew.-% SiO₂, etwa 10 Gew.-% Al₂O₃ und Fe₂O₃. Dieser Zement wird durch Fräsen und Backen von Kalkstein, Kreide und Ton gewonnen. CEM II Zement, auch Portlandkompositzement genannt, ist Portlandzement mit einer niedrigen (etwa 6 bis etwa 20 Gew,-%) oder moderaten (etwa 20 bis etwa 35 Gew.-%) Menge an zusätzlichen Komponenten. Dieser Zement kann weiterhin Hochofenschlacke, pyrogene Kieselsäure (höchstens 10 Gew.-%), natürliche Puzzolane, natürliche kalzinierte Puzzolane, Flugasche, verbrannte Schiefer oder Mischungen davon enthalten. CEM III Zement, auch Hochofenzement genannt, besteht aus Portlandzement, der 36 bis 85 Gew.-% Schlacke enthält, CEM IV Zement, auch als Puzzolanzement bezeichnet, enthält neben Portland Zement 11 bis 65 Gew.-% Mischungen aus Puzzolanen, Kieselsäure und Flugasche. CEM V Zement, auch Kompositzement genannt, enthält neben Portlandzement 18 bis 50 Gew.-% Schlacke oder Mischungen von natürlichen Puzzolanen, kalzinierten Puzzolanen und Flugasche. Zusätzlich können die verschiedenen Zementarten 5 Gew.-% zusätzliche anorganische, fein gemahlene Mineralverbindungen enthalten.

Calcium-Aluminat-Zemente umfassen Minerale der Formel CaO × Al₂O₃. Sie können z.B. durch Schmelzen von Calciumoxid (CaO) oder Kalkstein (CaCO₃) mit Bauxit oder Aluminat erhalten werden. Calcium-Aluminat-Zemente umfassen etwa 20 bis 40 Gew.-% CaO, bis zu 5 Gew.-% SiO₂, etwa 40 bis 80 Gew.-% Al₂O₃ und bis zu etwa 20 Gew.-% Fe₂O₃. Calcium-Aluminat-Zemente werden in der Norm DIN EN 14647 (01/2006) definiert.

Calcium-Sulfo-Aluminat Zemente können aus Tricalcium Aluminat (3 CaO × Al₂O₃), Anhydrit (CaSO₄), Calcium Sulfat Hemihydrat (CaSO₄ x 0.5 H₂O) und/oder Gips (CaSO₄ × 2 H₂O) hergestellt werden. Die bevorzugte Zusammensetzung entspricht im Wesentlichen 3 CaO × Al₂O₃ x 3 CaSO₄.

Der Begriff Gips umfasst Calciumsulfat-Dihydrat (CaSO₄ × 2H₂O), Calciumsulfat-Hemihydrat (CaSO₄ × ½ H₂O) und Calciumsulfat-Anhydrit (CaSO₄). Natürlich vorkommender Gips ist CaSO₄ × 2H₂O. Allerdings kann gebrannter Gips in einer Vielzahl von Hydratationszuständen gemäß der allgemeinen Formel CaSO₄·× nH₂O, mit 0 ≤ n < 2, vorliegen.

Unter Kalkhydrat ist erfindungsgemäß Calciumhydroxid zu verstehen.

In einer bevorzugten Ausführungsform ist das mineralische Bindemittel ein Zement, Kalkhydrat, Gips oder eine Mischung daraus.

Das Polymer, das in dem mineralischen Hybridschaum enthalten ist, kann wahlweise als Dispersion oder Feststoff, beispielsweise in Form eines Pulvers, eingesetzt werden, wobei das Polymer im Falle eines Pulvers in Form von Partikeln bzw. Polymerpartikeln vorliegt.

Der Begriff "Partikel" oder "Polymerpartikel" bezieht sich auf Polymerteilchen mit einer bestimmten Partikelgröße Dₓ bezogen auf eine Partikelgrößenverteilung, wobei x % der Partikel einen Durchmesser haben, der kleiner ist als der Dₓ-Wert. Die D₅₀-Partikeigröße ist der Medianwert der Partikelgrößenverteilung. Die Partikelgrößenverteilung kann beispielsweise mittels dynamischer Lichtstreuung ISO 22412:2008 gemessen werden. Die Partikelgrößenverteilung kann als Volumenverteilung, Oberflächenverteilung oder Zahlenverteilung angegeben werden. Gemäß der vorliegenden Erfindung bezieht sich der Dₓ-Wert auf die Zahlenverteilung, wobei x % der Gesamtzahl der Partikel einen kleineren Durchmesser haben. Bevorzugt liegt der D₅₀-Wert geeigneter Polymerpartikel im dispergierten Zustand im Bereich von 50 bis 1000 nm. Aufgrund einer reversiblen Agglomeration der Partikel während des Trocknens ist der D₅₀-Wert der Partikel in Pulverform größer und es ist ein D₅₀-Wert von 10 bis 300 µm bevorzugt. Die Partikelgrößenmessung von Polymerpulvern basiert auf optisch dynamischer, digitaler Bildverarbeitung. Ein dispergierter Partikelstrom passiert zwei LED Stroboskoplichtquellen, wobei die Schattenprojektionen der Partikel von zwei Digitalkameras erfasst werden. Die Trockenmessung erfolgt mit dem Gerät Camsizer XT von der Firma Retsch GmbH unter Verwendung eines Dispergierdrucks von 50 kPa.

Die Polymerpartikel können durch Substanzpolymerisation, Lösungspolymerisation, Emulsionspolymerisation, Suspensionspolymerisation oder Fällungspolymerisation gewonnen werden. Es kann ein geeigneter radikalischer, anionischer und/oder kationischer Initiator verwendet werden. Geeignete Initiatoren sind dem Fachmann bekannt.

Üblicherweise werden die Polymerpartikel durch Emulsionspolymerisation gewonnen. Dabei handelt es sich um ein Verfahren der radikalischen Polymerisation von hydrophoben Monomeren in einer wässrigen Phase. Bevorzugt werden zur Lösungsvermittlung der hydrophoben Monomere Emulgatoren zugesetzt. Geeignete Emulgatoren umfassen unter anderem solche mit einer Polyoxyalkylengruppe. Typischerweise bleiben die Emulgatoren, die bei der Emulsionspolymerisation zugesetzt werden, auf der Oberfläche der gebildeten Polymerpartikel haften, so dass der Emulgator durch die Emulsionspolymerisation auf der Oberfläche der Partikel aufgebracht wird. Außerdem wird ein wasserlöslicher Initiator zugesetzt, um die Polymerisation einzuleiten. Typische Initiatoren umfassen thermisch zerfallenden Radikalbildner, z.B. Peroxide oder Azo-Verbindungen, photochemische zerfallende Radikalbildner, z.B. Azobis(isobutyronitril) (AIBN) oder Radikalbildner, die durch Redoxreaktionen entstehen, z.B. die Kombination aus Ammoniumperoxodisulfat und Ascorbinsäure.

Wird das Polymer durch Emulsionspolymerisation gewonnen, kann das fertige Polymer in der wässrigen Phase direkt als Polymerdispersion verwendet werden. Alternativ kann das Wasser entfernt werden und die Polymerpartikel können redispergiert werden, wenn beispielsweise das mineralische Bindemittel, die Polymerpartikel und Wasser vermischt werden. Die Entfernung von Wasser aus Polymerdispersionen erfolgt durch Trocknen. Die Trocknung kann erfolgen durch Walzentrocknung, Sprühtrocknung, Trocknung im Wirbelbettverfahren, durch Substanztrocknung bei erhöhter Temperatur oder sonstige übliche Trocknungsverfahren. Der bevorzugte Bereich der Trocknungstemperatur liegt zwischen 50 °C und 250 °C. Alternativ kann auch eine Gefriertrocknung erfolgen. Besonders bevorzugt ist die Sprühtrocknung. Bevorzugt ist dabei eine Eingangstemperatur der Trockenluft im Bereich von 100°C bis 250 °C, bevorzugt 130 °C bis 220 °C und eine Ausgangstemperatur im Bereich von 30 °C bis 120 °C, bevorzugt 50 °C bis 100 °C. Insbesondere bevorzugt ist die Eingangstemperatur im Bereich von 130 bis 150 °C und die Ausgangstemperatur im Bereich von 60 bis 85 °C.

Die Bezeichnung "Polymer enthaltend Monomer-Einheiten, die sich aus mindestens einem ethylenisch ungesättigten Monomer ergeben" bezieht sich auf ein Polymer, welches auf mindestens ein ethylenisch ungesättigtes Monomer zurückgeht. Bei der Polymerisation werden die ethylenisch ungesättigten Doppelbindungen in die Polymerkette umgewandelt, indem beispielsweise ein Radikal die C=C-Doppelbindung aufbricht (Kettenstart) und das so entstandene Radikal mit C-C-Einfachbindung das nächste ethylenisch ungesättigte Monomer an der C=C-Doppelbindung angreift und so weiter, so dass eine Polymerkette gebildet wird (Wachstumsreaktion), bis es durch das Zusammentreffen zweier Radikale zum Kettenabbruch kommt. Die im Polymer enthaltenden Monomer-Einheiten entsprechen daher den zugrundeliegenden ethylenisch ungesättigten Monomeren bis auf die Tatsache, dass die C=C-Doppelbindungen aufgrund der Polymerisation nur noch als C-C-Einfachbindungen vorliegen und die Monomer-Einheiten in einer Polymerkette vorliegen.

Bevorzugt ist das mindestens eine ethylenisch ungesättigte Monomer gemäß der vorliegenden Erfindung eine Verbindung mit folgender Strukturformel: 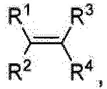 wobei R¹, R², R³ und R⁴ unabhängig voneinander aus der Gruppe bestehend aus -H, -(C₁-C₆)Alkyl, -O(C₁-C₆)Alkyl, -COOR⁵, -(C₁-C₆)AlkylCOOR⁵, -OC(O)(C₁-C₆)Alkyl, -(C₂-C₆)Alkenyl, und - (C₆-C₁₀)Aryl ausgewählt sind; und
wobei R⁵ -(C₁-C₉)Alkyl ist.

Der Präfix "Cₓ-C_{y}" bezeichnet die mögliche Anzahl von Kohlenstoffatomen in der jeweiligen Gruppe. Der Begriff "(C₁-C₉)Akyl" allein oder als Teil einer anderen Gruppe bezeichnet eine lineare aliphatische Kohlenstoffkette, welche 1 bis 9 Kohlenstoffatome enthält oder eine verzweigte aliphatische Kohlenstoffkette, welche 4 bis 9 Kohlenstoffatome enthält. Der Begriff "(C₁-C₆)Akyl" allein oder als Teil einer anderen Gruppe bezeichnet eine lineare aliphatische Kohlenstoffkette, welche 1 bis 6 Kohlenstoffatome enthält oder eine verzweigte aliphatische Kohlenstoffkette, welche 4 bis 6 Kohlenstoffatome enthält. Nicht einschränkende beispielhafte (C₁-C₉)Alkylgruppen bzw. (C₁-C₆)Alkylgruppen umfassen Methyl, Ethyl, n-Propyl, iso-Propyl, n-Butyl, 2-Butyl, iso-Butyl, tert-Butyl, n-Pentyl, 1-Methylbutyl, 2-Methylbutyl, 3-Methylbutyl, 2,2-Dimethylpropyl, 1-Ethylpropyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 2-Ethylhexyl, 1,1,2-Trimethylpropyl, 1,2,2-Trimethylpropyl, 1-Ethyl-1-methylpropyl, 1-Ethyl-2-methylpropyl n-Octyl, iso-Decyl, 2-Propyl-heptyl, Cyclohexyl, iso-Nonyl, iso-Tridecyi, iso-Pentyl, 3,5,5-Trimethyl-1-hexyl und 2-isopropyl-5-methylhexyl. Die (C₁-C₆)Alkyl-Gruppe kann optional mit einem oder mehreren Substituenten unabhängig voneinander ausgewählt aus der Gruppe bestehend aus -F, -Cl, -OH und -CF₃ substituiert sein.

Der Begriff "(C₂-C₆)A)kenyi" bezeichnet eine lineare oder verzweigte Alkylgruppe mit 2, 3, 4, 5 oder 6 Kohlenstoffatomen und mit einer, zwei oder drei Kohlenstoff-Kohlenstoff Doppelbindungen. In einer Ausführungsform weist das (C₂-C₆)Alkenyl eine Kohlenstoff-Kohlenstoff Doppelbindung auf. Nicht einschränkende beispielhafte (C₂-C₆)Alkenylgruppen umfassen Vinyl (Ethenyl), 1-Propenyl, 1- Butenyl, 2-Butenyl, 3-Butenyl, 1-Pentenyl und 1-Hexenyl. Die (C₂-C₆)AlkenylGruppe kann optional mit einem oder mehreren Substituenten unabhängig voneinander ausgewählt aus der Gruppe bestehend aus -F, -Cl, -OH und -CF₃ substituiert sein.

Der Begriff "(C₆-C₁₀)Aryl", bezeichnet mono- oder bizyklische aromatische Verbindungen mit 6 bzw. 10 Kohlenstoffatomen. Nicht einschränkende beispielhafte (C₆-C₁₀)Arylgruppen umfassen Phenyl und Napthyl. Die (C₆-C₁₀)Arylgruppe kann optional mit einem oder mehreren Substituenten unabhängig voneinander ausgewählt aus der Gruppe bestehend aus -F, -Cl, -OH und -CF₃, -(C₁-C₆)Alkyl oder -O(C₁-C₆)Alkyl substituiert sein.

Es können gegebenenfalls weiterhin in untergeordneten Mengen, beispielsweise in weniger als 10 Gew.-%, bevorzugt weniger als 8 Gew.-%, besonders bevorzugt weniger als 6 Gew.-%, Hilfsmonomere eingesetzt werden.

Beispiele für diese weiteren Monomere sind ethylenisch ungesättigte Mono- und Dicarbonsäuren, wie Acrylsäure, Methacrylsäure, Itaconsäure, Fumarsäure und Maleinsäure, Aconitsäure, Mesaconsäure, Crotonsäure, Citraconsäure, Acryloxypropionsäure, Methacryloxypropionsäure, Vinylessigsäure, Monomethylitaconat, Monomethylfumarat, Monobutyi-fumarat, Acrylsäureanhydrid, Methacrylsäureanhydrid, Maleinsäureanhydrid, oder Itaconsäureanhydrid, Acrylamidoglykolsäure und Methacrylamidoglykolsäure, Acrylamid, Methacryiamid, und Isopropylacrylamid, substituierte (Meth)acrylamide, wie z.B. N,N-Dimethylamino(meth)acrylat, 3-Dime-thylamino-2,2-dimethylpropyl-1-(meth)-acrylat, N,N-Dimethy[aminomethyl(meth)acrylamid, N-(4-Morpholinomethyl)(meth)acrylamid, Diacetonacrylamid; Acetoacethoxyethylmethacrylat; N-Me-thylol(meth)acrylamid, Polyethylen-oxid(meth)acrylat, Methoxypolyethylenoxid(meth)acrylat, Acrolein, Methacrolein; N-(2-Methacryloxyethyl)ethylenharnstoff, 1-(2-(3-Allyloxy-2-hydroxypropylamino) ethyl)-imidazolidin-2-on, Ureido(meth)acrylat, 2-Ethylenureidoethylmethacrylat. Weiterhin sind die folgenden Hilfsmonomere geeignet: ethylenisch ungesättigte, hydroxyalkylfunktionelle Comonomere, wie Methacrylsäure- und Acrylsäurehydroxy(Ci-Cs)-alkylester t wie Hydroxyethyl-, Hydroxypropyl- und 4-Hydroxybutylacrylat, Hydroxyethyl(meth)acrylat und Hydroxypropyl(meth)acrylate, 4-Hydroxybutyl(meth)acrylat, Glycidyl(meth)acrylat, sowie N-Vinylpyrrolidon und Vinylimidazol.

Besonders bevorzugt sind Acrylsäure, Methacrylsäure, Acrylamid, Hydroxyethyl(meth)acrylat und Hydroxypropyl(meth)acrylat

Weitere Beispiele für die Hilfsmonomere sind phosphorhaltige Monomere z. B. Vinylphosphonsäure und Allylphosphonsäure. Geeignet sind weiter die Mono- und Diester der Phos-phonsäure und Phosphorsäure mit Hydroxyalkyl(meth)acrylaten, speziell die Monoester. Geeignet sind weiter Diester der Phosphonsäure und Phosphorsäure die einfach mit einem Hydroxyalkyl(meth)acrylat und zusätzlich einfach mit einem davon verschiedenen Alkohol, z. B. einem Alkanol, verestert sind. Geeignete Hydroxyalkyl(meth)acrylate für diese Ester sind die im Folgenden als separate Monomere genannten, insbesondere 2-Hydroxyethyl(meth)acrylat, 3-Hydroxypropyl(meth)acrylat und 4 Hydroxybutyl(meth)acrylat. Entsprechende Dihydrogenphosphatestermonomere umfassen Phosphoalkyl(meth)acrylate, wie 2-Phosphoethyl(meth)acrylat, 2-Phosphopropyl{meth)acrylat, 3-Phosphopropyl(meth)acrylat, Phosphobutyl(meth)acrylat und 3-Phospho-2-hydroxypropyl(meth)acrylat. Geeignet sind auch die Ester der Phosphonsäure und Phosphorsäure mit alkoxilierten Hydroxyalkyl(meth)acrylaten, z.B. die Ethylenoxidkondensate von (Meth)acrylaten, wie H₂C=C(CH₃)COO(CH₂CH₂O)ₙP(OH)₂ und H₂C=C(CH3)COO(CH₂CH₂O)ₙP(=O)(OH)_{2.} worin n für 1 bis 50 steht. Weiter geeignet sind Phosphoalkylcrotonate, Phosphoalkylmaleate, Phosphoalkylfumarate, Phosphodialkyl(meth)-acrylate, Phosphodialkylcrotonate und Allylphosphate. Weitere geeignete Phosphorgruppen-haltige Monomere sind in WO 99/25780 und US 4,733,005 beschrieben, worauf hier Bezug genommen wird.

Weiterhin geeignet sind Vinylsulfonsäure, Allylsulfonsäure, Sulfoethylacrylat, Sulfoethyl{meth)acrylat, Sulfopropylacrylat, Sulfopropyl(meth)acrylat, 2 Hydroxy-3-acryloxypropy-Isulfonsäure, 2-Hydroxy-3-methacryloxypropylsulfonsäure, Styrolsulfonsäuren und 2-Ac-rylamido-2-methylpropan-sulfonsäure. Geeignete Styrolsulfonsäuren und Derivate davon sind Styrol-4-sulfonsäure und Styrol-3-sulfonsäure und die Erdalkali- oder Alkali-metallsalze davon, z. B. Natrium-styrol-3-sulfonat und Natrium-styrol-4-sulfonat, Poly(allylglycidyl ether) und Mischungen davon, in Form verschiedener Produkte der Bezeichnung Bisomer ^{®} von Laporte Performance Chemicals, UK, Dazu zählt z. B. Bisomer ^{®} MPEG 350 MA, ein Methoxypolyethylenglykolmonomethacrylat.

In einer bevorzugten Ausführungsform enthält das Polymer Monomer-Einheiten, die sich aus mindestens einem ethylenisch ungesättigten Monomer ausgewählt aus der Gruppe bestehend aus Ethylen, Propylen, Butadien, Styrol, Vinylacetat, Vinylchlorid, Acrylsäureestern, Methacrylsäureestern, und Mischungen der zuvor genannten Monomere ergeben. Besonders bevorzugt ist als Polymer, sofern es aus mindestens einem ethylenisch ungesättigten Monomer aufgebaut ist, ein Copolymer ausgewählt aus der Gruppe bestehend aus Styrol-(Meth)Acrylat-Copolymeren, Styrol-Butadien-Copolymeren, (Meth)Acrylat-Copolymeren und Ethylen-Vinylacetat-Copolymeren. Das Polymer ist ein Styrol-Acrylat-Copolymer.

Die Bezeichnung "Polymer enthaltend Monomer-Einheiten, die sich aus einer Kombination aus Polyisocyanaten und Polyolen und/oder Polyaminen ergeben" bezeichnet ein Polymer, welches auf mindestens ein Polyisocyanat-Monomer und mindestens ein Polyol- und/oder Polyamin-Monomer zurückgeht. Bei der Polymerisation durch Polyadditionsreaktion werden Polyisocyanate mit Polyolen und/oder Polyaminen vernetzt. Die Verknüpfung erfolgt durch die Reaktion einer Isocyanatgruppe (-N=C=O) eines Moleküls mit einer Hydroxygruppe (-OH) oder einer Amingruppe (-NH₂) eines anderen Moleküls unter Bildung einer Urethangruppe (-NH-CO-O-) oder einer Harnstoffgruppe (-NH-CO-NH-).

Geeignete Polyisocyanat-Monomere sind Verbindungen, die zwei oder mehrere gegenüber Hydroxy-Gruppen und/oder Amingruppen reaktive Isocyanat-Gruppen besitzen. Diese umfassen sowohl aromatische als auch aliphatische Isocyanate. Geeignete Polyisocyanate umfassen 2,4-Diisocyanatotoluol, 2,6-Diisocyanatotoluol, Methylendi(phenylisocyanat), polymeres Methylendi(phenylisocyanat), Bis-(4-isocyanatocydo-hexyi)-methan, 1,3-Bis-(1-isocyanato-1-methyl-ethyl)-benzol (m-TMXDI), 1-Isocyanato-5-isocyanatomethyl-3,3,5-trimethyl-cyctohexan, Naphtylendiisocyanat, Hexamethylendiisocyanat 1,6-Diisocyanatohexan, Isophorondiisocyanat, Diisocyanatodicyclohexylmethan und Biuret-Triisocyanat. Ebenso können technische Isomeren-Gemische der einzelnen aromatischen Polyisocyanate eingesetzt werden. Weiterhin sind auch die sogenannten "Lackpolyisocyanate" auf Basis von Bis-(4-isocyanatocyclohexyl)-methan, 1,6-Diisocyanatohexan, 1-Isocyanato-5-isocyariatomethyl-3,3,5-trimethyl-cyclohexan grundsätzlich geeignet. Der Begriff "Lackpolyisocyanate" kennzeichnet Allophanat-, Biuret-, Carbodiimid-, Isocyanurat-, Uretdion-, Urethan-Gruppen aufweisende Derivate dieser Diisocyanate, bei denen der Rest-Gehalt an monomeren Diisocyanaten dem Stand der Technik entsprechend auf ein Minimum reduziert wurde. Daneben können auch noch modifizierte Polyisocyanate eingesetzt werden, die beispielsweise durch hydrophile Modifizierung von "Lackpolyisocyanaten" auf Basis von 1,6-Diisocyanatohexan zugänglich sind.

Geeignete Polyol-Monomere sind Verbindungen, die zwei oder mehrere gegenüber Isocyanat-Gruppen reaktive Hydroxy-Gruppen besitzen. Erfindungsgemäße Polyol-Monomere umfassen auch Polyether-Polyole und Polyester-Polyole. Beispiele für Polyol-Monomere sind 1,2-Ethandiol bzw. Ethylenglykol, 1,2-Propandiol bzw. 1,2-Propylenglykol, 1,3-Propandiol bzw, 1,3-Propylenglykol, 1,4-Butandiol bzw. 1,4-Butylenglykol, 1,6-Hexandiol bzw. 1,6-Hexamethylenglykol, 2-Methyl-1,3-propandiol, 2,2-Dimethyl-1,3-propandiol bzw. Neopentylglykol, 1,4-Bis-(hydroxymethyl)-cyclohexan bzw. Cyclohexandimethanol, 1,2,3-Propantriol bzw. Glycerol, 2-Hydroxymethyl-2-methyl-1,3-propanol bzw, Trimethylolethan, 2-Ethyl-2-hydroxymethyl-1,3-propandiol bzw. Trimethylolpropan, 2,2-Bis-(hydroxymethyl)-1,3-propandiol und Pentaerythrit.

Geeignete Polyamin-Monomere sind Verbindungen, die zwei oder mehrere gegenüber Isocyanat-Gruppen reaktive Amin-Gruppen besitzen. Beispiele für verwendbare Polyamin-Monomere sind Diethyltoluylendiamin, Methyl-bis(methylthio)phenylendiamin, Adipinsäuredihydrazid, Ethylendiamin, Diethylentriamin, Triethylentetramin, Tetraethylenpentamin, Pentaethylenhexamin, Dipropylentriamin, Hexamethylendiamin, Hydrazin, Isophorondiamin, N-(2-Aminoethyl)-2-aminoethanol, Polyoxyalkylenamine, Addukte aus Salzen der 2-Acrylamido-2-methylpropan-1-sulfonsäure (AMPS) und Ethylendiamin, Addukte aus Salzen der (Meth)acrylsäure und Ethylendiamin, Addukte aus 1,3-Propansulfon und Ethylendiamin oder beliebige Kombination dieser Polyamine.

Weitere geeignete Polyurethane und deren Herstellung werden in der Patentanmeldung DE 103 15 175 A beschrieben.

Das erfindungsgemäße Polymer ist ein Styrol-Acrylat-Copolymer.

Es ist bevorzugt, dass das Polymer ein durchschnittliches (Gewichtsmittel) Molekulargewicht von weniger als 2.500.000 g/mol oder weniger als 1.500.000 g/mol, bevorzugter von 50.000 bis 1.500.000 g/mol aufweist. Das durchschnittliche Molekulargewicht kann als Gewichtsmittel durch Gelpermeationschromatographie z.B. in THF bestimmt werden. Zu diesem Zweck wird die flüssige Polymerdispersion in einem großen Überschuss Tetrahydrofuran (THF) gelöst, zum Beispiel mit einer Polymerkonzentration von 2 Milligramm Polymer pro Milliliter THF, und der unlösliche Anteil mit einem Membranfilter von 200 nm Maschenweite abgetrennt.

Bei den grenzflächenaktiven Substanzen kann es sich um nichtionische, anionische, kationische, zwitterionische und amphiphile Verbindungen sowie Proteine oder Mischungen daraus handeln. Bevorzugt sind anionische grenzflächenaktiven Substanzen.

Geeignete anionische grenzflächenaktiven Substanzen sind Diphenylenoxidsulfonate, Alkan- und Alkylbenzolsulfonate, Alkylnaphthalinsulfonate, Olefinsulfonate, Alkylethersulfonate, Alkylsulfate, Alkylethersulfate, alpha-Sulfofettsäureester, Acylaminoalkansulfonate, Acylisethionate, Alkylethercarboxylate, N-Acylsarcosinate, Alkyl- und Alkyletherphosphate. Beispiele für geeignete anionische grenzflächenaktiven Substanzen sind C₈-C₁₈-Alkylsulfate, C₈-C₁₈-Alkylethersulfate, C₈-C₁₈-Alkylsulfonate, C₈-C₁₈-Alkylbenzolsulfonate, C₈-C₁₈-α-Olefinsulfonate, C₈-C₁₈-Sulfosuccinate, α-Sulfo-C₈-C₁₈-fettsäuredisalze und C₈-C₁₈-Fettsäuresalze. Die anionischen grenzflächenaktiven Substanzen liegen im Allgemeinen als Alkalimetallsalze vor, insbesondere als Natriumsalze. Beispiele für Natriumsalze von anionischen grenzflächenaktiven Substanzen sind Natriumlaurylsulfat, Natriummyristylsulfat, Natriumcetylsulfat, Natriumsulfate von ethoxyliertem Lauryl- oder Myristylalkohol mit einem Ethoxylierungsgrad von 2 bis 10, Lauryl- oder Cetylsulfonat-Natriumsalz, Hexadecylbenzolsulfonat-Natriumsalz, C₁₄/C₁₆-α-Olefinsulfonat-Natriumsalz, Lauryl- oder Cetylsulfosuccinat-Natriumsalz, Dinatrium-2-sulfolaurat oder Natriumstearat oder Mischungen daraus.

Als nichtionische grenzflächenaktiven Substanzen können Alkylphenolpolyglykolether, Fettalkoholpolyglykolether, Fettsäurepolyglykolether, Fettsäurealkanolamide, Blockcopolymere, Aminoxide, Glycerinfettsäureester, Sorbitanester oder Alkylpolyglucoside verwendet werden. Beispiele für geeignete nichtionische grenzflächenaktiven Substanzen sind C₈-C₁₈-Fettalkoholethoxylate, Blockcopolymere aus Ethylenoxid und Propylenoxid oder C₈-C₁₈-Alkylpolyglycoside oder Mischungen daraus. Beispiele für Blockcopolymere sind Poloxamere. Poloxamere sind Blockcopolymere aus Ethylenoxid und Propylenoxid, wobei in bevorzugten Poloxameren von 2 bis 130 Ethylenoxid-Einheiten und 10 bis 70 Propylenoxid-Einheiten enthalten sind.

Beispiele für kationische grenzflächenaktiven Substanzen sind Alkyltriammoniumsalze, Alkylbenzyldimethylammoniumsalze oder Alkylpyridiniumsalze.

In einer Ausführungsform werden die grenzflächenaktiven Substanzen ausgewählt aus der Gruppe bestehend aus C₈-C₁₈-Alkylsulfaten, C₈-C₁₈-Alkylethersulfaten, C₈-C₁₈-Alkylsulfonaten, C₈-C₁₈-Alkylbenzolsulfonaten, C₈-C₁₈-α-Olefinsulfonaten, C₈-C₁₈-Sulfosuccinateri, α-Sulfo-C₈-C₁₈-fettsäuredisalzen, C₈-C₁₈-Fettsäuresalzen, C₈-C₁₈-Fettalkoholethoxylaten, Blockcopolymeren aus Ethylenoxid und Propylenoxid, C₈-C₁₈-Alkylpolyglycosiden, und Mischungen daraus.

Als Verdicker können sowohl organische als auch anorganische Verdicker für den erfindungsgemäßen Hybridschaum verwendet werden.

Geeignete organische Verdicker sind ausgewählt aus der Gruppe bestehend aus Celluloseethem, Stärkeethern, und Polyacrylamiden. In einer weiteren Ausführungsform ist der Verdicker ausgewählt aus Polysaccharidderivaten und (Co)polymeren mit einem gewichtsmittleren Molekulargewicht Mw von mehr als 500.000 g/Mol, insbesondere mehr als 1.000.000 g/Mol.

In einer weiteren Ausführungsform ist der Verdicker ausgewählt aus Celluloseethern, Stärkeethern und (Co)polymeren, die Struktureinheiten von nicht-ionischen (Meth)acrylamidmonomeren und/oder Sulfonsäuremonomeren und gegebenenfalls von weiteren Monomeren umfassen. Bevorzugt sind Celluloseether und Stärkeether. Besonders bevorzugt sind Celluloseether.

Geeignete Celluloseether sind Alkylcellulosen wie Methylcellulose, Ethylcellulose, Propylcellulose und Methylethylcellulose; Hydroxyalkylcellulosen wie Hydroxyethylcellulose (HEC), Hydroxypropylcellulose (HPC) und Hydroxyethylhydroxypropylcellulose; Alkylhydroxyalkylcellulosen wie Methylhydroxyethylzelluose (MHEC), Methylhydroxypropylzelluose (MHPC) und Propylhydroxypropylcellulose; und carboxylierte Celluloseether, wie Carboxymethylcellulose (CMC). Bevorzugt sind die nicht-ionischen Celluloseetherderivate, insbesondere Methylcellulose (MC), Hydroxypropylcellulose (HPC), Hydroxyethylcellulose (HEC) und Ethylhydroxyethylcellulose (E-HEC), und besonders bevorzugt sind Methylhydroxyethylcellulose (MHEC) und Methylhydroxypropylcellulose (MHPC). Die Celluloseetherderivate sind jeweils durch entsprechende Alkylierung und Alkoxylierung von Cellulose und im Handel erhältlich.

Geeignete Stärkeether sind nichtionische Stärkeether, wie Hydroxypropylstärke, Hydroxyethylstärke und Methylhydroxypropylstärke. Bevorzugt ist Hydroxypropylstärke. Geeignete Verdicker sind auch mikrobiell hergestellte Polysaccharide wie Welan Gum und/oder Xanthane und natürlich vorkommende Polysaccharide wie Alginate, Carrageenane und Galactomannane. Diese können aus entsprechenden Naturprodukten durch extraktive Verfahren gewonnen werden, wie beispielsweise im Fall von Alginaten und Carrageenanen aus Algen, im Fall von Galactomannanen aus Johannesbrotbaumkernen.

(Co)polymere mit einem gewichtsmittleren Molekulargewicht MW von mehr als 500.000 g/mol, besonders bevorzugt mehr als 1.000.000 g/mol, können (vorzugsweise durch radikalische Polymerisation) aus nichtionischen (Meth)acrylamidmonomeren und/oder Sulfonsäuremonomeren hergestellt werden. In einer Ausführungsform sind die Monomere ausgewählt unter Acrylamid, Methacrylamid, N-Methylacrylamid, N-Methylmethacrylamid, N,N-Dimethylacrylamid, N-Ethylacrylamid, N,N-Diethylacrylamid, N-Cyclohexylacrylamid, N-Benzylacrylamid, N,N-Dimethylaminopropylacrylamid, N,N-Dimethylaminoethylacrylamid und/oder N-tert.-Butylacrylamid und/oder Styrolsulfonsäure, 2-Acrylamido-2-methylpropansulfonsäure, 2-Methacrylamido-2-methylpropansulfonsäure, 2-Acrylamidobutansulfonsäure und/oder 2-Acrylamido-2,4,4-trimethylpentansulfonsäure oder den Salzen der genannten Säuren. Vorzugsweise enthalten die (Co)polymere mehr als 50 mol-% und besonders bevorzugt mehr als 70 mol-% Struktureinheiten, die sich von nichtionischen (Meth)acrylamidmonomeren und/oder Sulfonsäuremonomeren ableiten. Andere Struktureinheiten, die in den Copolymeren enthalten sein können, sind beispielsweise von den Monomeren (Meth)acrylsäure, Estern von (Meth)acrylsäuren mit verzweigten oder unverzweigten C₁- bis C₁₀-Alkoholen, Vinylacetat, Vinylpropionat und/oder Styrol abgeleitet.

In einer weiteren Ausführungsform ist der Verdicker ausgewählt aus Methylcellulose, Hydroxypropylcellulose, Hydroxyethylcellulose, Ethylhydroxyethylcellulose, Hydroxypropylstärke, Hydroxyethylstärke, Methylhydroxypropylstärke, und (Co)polymeren, die Struktureinheiten enthalten, welche abgeleitet sind von Acrylamid, Methacrylamid, N,N-Dimethylacrylamid, 2-Acrylamido-2-methylpropansulfonsäure und gegebenenfalls (Meth)acrylsäure, Estern von (Meth)acrylsäuren mit verzweigten oder unverzweigten C₁- bis C₁₀-Alkoholen, Vinylacetat, Vinylpropionat und/oder Styrol.

Geeignete anorganische Verdicker sind beispielsweise Schichtsilicate.

Weiterhin können verschiedene Additive gemäß der vorliegenden Erfindung verwendet werden. In einer bevorzugten Ausführungsform ist das mindestens eine Additiv ausgewählt aus der Gruppe bestehend aus pH-Modifikatoren, Füllstoffen, Beschleunigern, Verzögerern, Rheologiemodifikatoren, Superplastifizierungsmitteln, Tensiden, Hydrophobierungsmitteln und Mischungen daraus. In einer besonders bevorzugten Ausführungsform ist das mindestens eine Additiv ein Hydrophobierungsmittel.

Rheologiemodifikatoren stellen die Viskosität und damit das Fließverhalten ein und sorgen für ein gutes Gleichgewicht zwischen Konsistenz, Haltbarkeit und Anwendungseigenschaften. Diese Modifikatoren können auf synthetischen Polymeren (z. B. Acrylpolymeren), Cellulose, Siliciumdioxid, Stärken oder Tonen basieren.

Superplastifizierungsmittel sind Polymere, die als Dispergiermittel wirken, um Partikelsegregation zu vermeiden oder die Rheologie und damit die Verarbeitbarkeit von Suspensionen zu verbessern. Superplastifizierungsmittel können im Allgemeinen in folgende Kategorien eingeteilt werden: Lignosulfonate, Melaminsulfonate, Naphthalinsulfonate, Kammpolymere (z. B. Polycarboxylatether, polyaromatische Ether, kationische Copolymere und Mischungen daraus) und sulfonierte Ketonformaldehydkondensate. Bevorzugte Superplastifizierungsmittel sind Naphthalinsulfonate oder Polycarboxylatether.

Die Abbindezeit des zementären Hybridschaums kann durch die Zugabe von bestimmten Verbindungen, die als Verzögerer/Beschleuniger bezeichnet werden, verlängert/verkürzt werden. Verzögerer können in die Gruppen von Lignosulfonaten, Cellulosederivaten, Hydroxylcarbonsäuren, Organophosphaten, synthetischen Verzögerern und anorganischen Verbindungen aufgeteilt werden. Nicht beschränkende Beispiele für Verzögerer sind Hydroxyethylcellulose, Carboxymethylhydroxyethyicellulose, Citronensäure, Weinsäure, Gluconsäure, Glucoheptonat, Maleinsäureanhydrid, 2-Acrylamido-2-methylpropansulfonsäure (AMPS) -Copolymere, Borax, Borsäure und ZnO. Nicht beschränkende Beispiele für Beschleuniger sind CaCl₂, KCl, Na₂SiO₃, NaOH, Ca(OH)₂ und CaO x Al₂O₃, Lithiumsilikat, Kaliumsilikat und Aluminiumsalze wie Aluminiumsulfat.

Der Begriff "Füllstoff" bezieht sich in erster Linie auf Materialien, die hinzugefügt werden können, um das Volumen zu erhöhen, ohne die Eigenschaften des zementären Hybridschaums zu beeinträchtigen. Die genannten Füllstoffe können aus der Gruppe bestehend aus Quarzsand oder Quarzpulver, Calciumcarbonat, Gesteinsmehl, Füllstoffen mit niedriger Dichte (z.B. Vermiculit, Perlit, Diatomeenerde, Glimmer, Talkpulver, Magnesiumoxid, Schaumglas, Hohlkugeln, Schaumsand, Ton, Polymerpartikel), Pigmenten (z.B. Titandioxid), hochdichte Füllstoffen (z.B. Bariumsulfat), Metallsalzen (z.B Zinksalze, Calciumsalze etc.) und Mischungen daraus ausgewählt werden. Hierbei eignen sich Korngrößen insbesondere bis zu 500 µm. Es ist besonders bevorzugt, dass die mittlere Korngröße des Schaumglases bis zu 300 µm beträgt.

Tenside, die zusätzlich zu den hierin beschriebenen grenzflächenaktiven Substanzen verwendet werden können, umfassen nichtionische Tenside, anionische Tenside, kationische Tenside, zwitterionische Tenside und Proteine oder synthetische Polymere.

Der Begriff "pH-Modifizierer" bezieht sich auf ein alkalisches oder saures Mittel und schließt mineralische und organische Säuren sowie anorganische und organische Basen ein.

Hydrophobierungsmittel können die Aufnahme von Wasser, beispielsweise in Form von Wasserdampf, in den Hybridschaum verhindern. Dadurch können Schäden, die durch eindringendes Wasser in den Hybridschaum entstehen, verhindert oder zumindest verringert werden. Geeignete Hydrophobierungsmittel umfassen Silikone, Fettsäuren und Wachse.

Der erfindungsgemäße Hybridschaum enthält weiterhin vorzugsweise Kalksteinmehl, was die Verarbeitbarkeit verbessert und die Dichte bzw. Festigkeit erhöht. Kalksteinmehl enthält unter anderem Calcit und Aragonit. Ebenfalls können weiterhin Tonminerale, Dolomit, Quarz und Gips enthalten sein. Die Menge des Kalksteinmehls beträgt vorzugsweise 0,1 bis 90 Gew.-%, noch bevorzugter 10 bis 80 Gew.-% und am bevorzugtesten 20 bis 75 Gew.-% bezogen auf das Gesamtgewicht des Hybridschaums.

Die Menge des mineralischen Bindemittels beträgt vorzugsweise 10 bis 98 Gew.-%, bevorzugt 25 bis 75 Gew.-% bezogen auf das Gesamtgewicht des Hybridschaums.

Die Menge des mindestens einen Polymers beträgt vorzugsweise 1 bis 25 Gew.-%, bevorzugt 2 bis 15 Gew.-% und am bevorzugtesten 3 bis 8 Gew.-% bezogen auf das Gesamtgewicht des Hybridschaums. Das Polymer kann sowohl als Pulver als auch als Polymerdispersion eingesetzt werden. Die oben angegebenen Mengen beziehen sich auf den Feststoffanteil des Polymers. Wird das Polymer in Form einer Polymerdispersion in den Hybridschaum eingebracht, beträgt der Polymer-Feststoffgehalt in der Polymerdispersion 1 bis 50 Gew.-%, bevorzugt 10 bis 40 Gew.-% bezogen auf das Gesamtgewicht der Polymerdispersion.

Bezogen auf den Feststoffanteil des mineralischen Bindemittels beträgt die Menge des mindestens einen Polymers vorzugsweise 1 bis 50 Gew.-%, besonders bevorzugt 4 bis 30 Gew.-%. Demnach liegen das mineralische Bindemittel und das mindestens eine Polymer im erfindungsgemäßen Hybridschaum vorzugsweise in einem Verhältnis von 99:1 bis 50:50, besonders bevorzugt in einem Verhältnis von 96:4 bis 70:30 vor.

Die Menge der mindestens einen grenzflächenaktiven Substanz beträgt vorzugsweise 0,01 bis 2 Gew.-%, noch bevorzugter 0,03 bis 0,3 Gew.-% und am bevorzugtesten 0,05 bis 0,1 Gew.-% bezogen auf das Gesamtgewicht des Hybridschaums.

Die Menge des Verdickers beträgt vorzugsweise 0,01 bis 1 Gew.-% bezogen auf das Gesamtgewicht des Hybridschaums.

Die Menge des optional mindestens einen Additivs beträgt vorzugsweise 0,01 bis 3 Gew.-%, noch bevorzugter 0,05 bis 1 Gew.-% und am bevorzugtesten 0,1 bis 0,5 Gew.-% bezogen auf das Gesamtgewicht des Hybridschaums.

Der Hybridschaum kann in einer Ausführungsform weiterhin mindestens eine Art von Gesteinskörnung mit einer maximalen Körnung D₉₀ von 2 mm enthalten. Wie oben bereits erläutert kann die Körnung beispielsweise mittels dynamischer Lichtstreuung ISO 22412:2008 gemessen werden.

Wie bereits oben erwähnt betrifft die Erfindung weiterhin ein Verfahren zur Herstellung eines Hybridschaums umfassend
(1) Herstellen einer Mischung enthaltend
   - mindestens ein mineralisches Bindemittel;
   - mindestens ein Styrol-Acrylat-Copolymer;
   - optional mindestens ein Additiv; und
   - Wasser;
(2) Mischen der in Schritt (1) erhaltenen Mischung mit einem wässrigen Schaum enthaltend Wasser und mindestens eine grenzflächenaktive Substanz ausgewählt aus der Gruppe bestehend aus C8-C18-Alkylsulfaten, C8-C18-Alkylethersulfaten, C8-C18-Alkylsulfonaten, C8-C18-Alkylbenzolsulfonaten, C8-C18-α-Olefinsulfonaten, C8-C18-Sulfosuccinaten, α-Sulfo-C8-C18-fettsäuredisalzen, C8-C18-Fettsäuresalzen, C8-C18-Fettalkoholethoxylaten, Blockcopolymeren aus Ethylenoxid und Propylenoxid, C8-C18-Alkylpolyglycosiden und Mischungen daraus; und
(3) optional Aushärten des in Schritt (2) erhaltenen Hybridschaums.

Die oben angeführten Begriffsdefinitionen und Beispiele, sowie die bevorzugten Stoff- und Mengenangaben finden sind auch für die Ausgangsstoffe des Verfahrens zur Herstellung eines Hybridschaums bevorzugt.

In einer bevorzugten Ausführungsform ist das mineralische Bindemittel ein Zement, Kalkhydrat, Gips oder eine Mischung daraus.

In einer bevorzugten Ausführungsform enthält der wässrige Schaum weiterhin einen Verdicker.

In einer bevorzugten Ausführungsform ist der mindestens eine Verdicker ausgewählt aus der Gruppe bestehend aus Celluloseethern, Stärkeethem und Polyacrylamiden. Besonders bevorzugt ist der mindestens eine Verdicker ausgewählt aus der Gruppe bestehend aus Celluloseethern.

In einer bevorzugten Ausführungsform ist das optional mindestens eine Additiv ausgewählt ist aus der Gruppe bestehend aus pH-Modifikatoren, Füllstoffen, Beschleunigern, Verzögerern, Rheologie-Modifizierern, Superplastifizierungsmitteln, Tensiden, Hydrophobierungsmitteln und Mischungen daraus.

Verfahrensschritt (1) umfasst die Herstellung einer Mischung enthaltend
- mindestens ein mineralisches Bindemittel;
- mindestens eir Styrol-Acrylat-Copolymer;
- optional mindestens ein Additiv; und
- Wasser;

Bezogen auf den Feststoffanteil des mineralischen Bindemittels beträgt die Menge des mindestens einen Polymers bevorzugt 1 bis 50 Gew.-%, besonders bevorzugt 4 bis 30 Gew.-%. Demnach liegen das mineralische Bindemittel und das mindestens eine Polymer im erfindungsgemäßen Hybridschaum vorzugsweise in einem Verhältnis von 99:1 bis 50:50, besonders bevorzugt in einem Verhältnis von 96:4 bis 70:30 vor.

Der Wassergehalt wird als Verhältnis von Wasser zum Feststoffgehalt des mineralischen Bindemittels, nachfolgend auch als Wasser/Bindemittel-Wert (w/b-Wert) bezeichnet, angegeben. Vorzugsweise ist der w/b-Wert 0,3-1,0 und besonders bevorzugt 0,4-0,7.

Die Menge des optional eingesetzten mindestens einen Additivs beträgt vorzugsweise 0,01 bis 3 Gew.-%, noch bevorzugter 0,05 bis 1 Gew.-% und am bevorzugtesten 0,1 bis 0,5 Gew.-% bezogen auf den Feststoffanteil des mineralischen Bindemittels.

Verfahrensschritt (2) umfasst das Mischen der in Schritt (1) erhaltenen Mischung mit einem wässrigen Schaum enthaltend Wasser und mindestens eine grenzflächenaktive Substanz ausgewählt aus der Gruppe bestehend aus C8-C18-Alkylsulfaten, C8-C18-Alkylethersulfaten, C8-C18-Alkylsulfonaten, C8-C18-Alkylbenzolsulfonaten, C8-C18-α-Olefinsulfonaten, C8-C18-Sulfosuccinaten, α-Sulfo-C8-C18-fettsäuredisalzen, C8-C18-Fettsäuresalzen, C8-C18-Fettalkoholethoxylaten, Blockcopolymeren aus Ethylenoxid und Propylenoxid, C8-C18-Alkylpolyglycosiden und Mischungen daraus.

Bevorzugt wird der Schaum unter die in Schritt (1) erhaltene Mischung untergehoben.

Die Menge der mindestens einen grenzflächenaktiven Substanz beträgt vorzugsweise 0,01 bis 2 Gew.-%, noch bevorzugter 0,03 bis 0,3 Gew.-% und am bevorzugtesten 0,05 bis 0,1 Gew.-% bezogen auf das Gesamtgewicht des wässrigen Schaums.

Vorzugsweise enthält der wässrige Schaum weiterhin einen Verdicker. In einer bevorzugten Ausführungsform beträgt die Menge des Verdickers von 0,01 bis 1 Gew.-% bezogen auf das Gesamtgewicht des wässrigen Schaums.

Der optionale Verfahrensschritt (3) umfasst das Aushärten des in Schritt (2) erhaltenen Hybridschaums.

Vorzugsweise erfolgt das optionale Aushärten des Hybridschaums für mindestens 12 h bei 0 °C bis 100 °C.

Wie bereits oben erwähnt betrifft die Erfindung weiterhin einen Hybridschaum, der nach dem erfindungsgemäßen Verfahren erhältlich ist.

Des Weiteres betrifft die Erfindung die Verwendung des erfindungsgemäßen Hybridschaums zum Kleben, Füllen und/oder Dämmen.

Insbesondere ist die Verwendung des erfindungsgemäßen Hybridschaums für folgende Anwendungen bevorzugt:
- Klebemörtel, wie z.B. WDVS-Klebemörtel (WDVS=Wärmedämmverbundsystem), Mauerklebemörtel (Dünnbettmörtel),
- Mörtel für Wärmedämmung (z.B. Dämmputze),
- Stuck, Glättungsputz und Oberputze,
- ausgleichende Unter- und Überschichten, z.B. im Estrich,
- Akkustikschaum (Luft-Schalldämmung),

Die Erfindung wird durch die nachfolgenden Beispiele näher beschrieben. Beispiele 3-4, 6, 8-9, 11 sind nicht erfindungsgemäß.

### Beispiele

Nachfolgend wird beispielhaft die Herstellung eines erfindungsgemäßen Hybridschaums beschrieben.

Zunächst wird Zement, Kalksteinmehl und Celluloseether vorgelegt. Anschließend wird Polycarboxylatether, eine Polymerdispersion und Wasser zu der vorgelegten trockenen Mischung hinzugegeben und für 110 Sekunden mit einem Küchenmischer vermischt. Anschließend erfolgt die Zugabe eines wässrigen Schaumes enthaltend eine grenzflächenaktive Substanz zu der Mischung über einen Schaumgenerator, wobei der Schaum der Mischung untergehoben wird. Anschließend wird die Mischung erneut mit einem Küchenmischer für weitere 130 Sekunden gemischt um einen erfindungsgemäßen Hybridschaum zu erhalten.

Für die nachfolgenden Untersuchungen wurden alle Beispiele (außer das Referenzbeispiel 1) in der oben beschriebenen Weise hergestellt. Das Referenzbeispiel 1 wurde abweichend von der oben beschriebenen Weise ohne Schaumzugabe hergestellt und stellt einen klassischen WDVS-Klebemörtel aus der Praxis dar. Die Zusammensetzung der Beispiele ist in folgender Tabelle angegeben. Sofern nicht anders angegeben beziehen sich die Gew.-%-Angaben auf das Gesamtgewicht des Hybridschaums.

### Zusammensetzung der hergestellten Beispiele

| | Polyvinylacetat [Gew.-%] | Styrol-Acrylat-Copolymer I [Gew.-%] | Styrol-Acrylat-Copolymer II [Gew.-%] | Styrol-Butadien-Copolymer [Gew,-%] | Polyurethan [Gew.-%] | Zement [Gew.-%] | Kalksteinmehl [Gew.-%] |
|---|---|---|---|---|---|---|---|
| Ref.-Bsp. 1 | 2 | - | - | - | - | 73 | 24 |
| Ref.-Bsp. 2 | - | - | - | - | - | 73 | 24 |
| Bsp. 1 | - | 3,5 | - | - | - | 73 | 24 |
| Bsp. 2 | - | 7 | - | - | - | 73 | 24 |
| Bsp. 3 | 3,5 | - | - | - | - | 73 | 24 |
| Bsp. 4 | 7 | - | - | - | - | 73 | 24 |
| Bsp. 5 | - | 7 | - | - | - | 25 | 75 |
| Bsp. 6 | 7 | - | - | - | - | 25 | 75 |
| Bsp. 7 | - | 7 | - | - | - | 50 | 50 |
| Bsp. 8 | 7 | - | - | - | - | 50 | 50 |
| Bsp. 9 | - | - | - | 3,5 | - | 73 | 24 |
| Bsp. 10 | | | 3,5 | | | 73 | 24 |
| Bsp. 11 | - | - | - | - | 3,5 | 73 | 24 |

Die Polyvinylacetat-Dispersion enthält Polyvinylacetat-co-ethylen. Die Dispersion hat einen Feststoffgehalt von 100 Gew.-%, liegt also als Dispersionspulver vor. Das Polymer hat eine Glasübergangstemperatur von 0 °C.

Die Styrol-Acrylat-Copolymer-Dispersion I enthält ein Styrol-Butylacrylat-Copolymer mit einer Glasübergangstemperatur von 19 °C. Als stabilisierende Hilfsmonomere sind Acrylsäure und Acrylamid jeweils in einer Menge von weniger als 2 Gew.% in Bezug auf die gesamte Polymermenge, gerechnet fest, verwendet. Die Dispersion hat einen Feststoffgehalt von 50 Gew.-%. Das Polymer hat eine Partikelgröße von 120 nm.

Die Styrol-Acrylat-Copolymer-Dispersion II enthält ein Styrol-Butylacrylat-Copolymer. Die Dispersion hat einen Feststoffgehalt von 51 Gew.-%. Als stabilisierende Hilfsmonomere sind Acrylsäure und Acrylamid jeweils in einer Menge von weniger als 2 Gew.% in Bezug auf die gesamte Polymermenge, gerechnet fest, verwendet. Die Dispersion enhält weiterhin C12/14-Fettalkohol-Ethoxylat-30-EO-sulfat in einer Menge von 3 Gew.-% und C16/18-Oxoalkohol-18 EO in einer Menge von 3 Gew.-%. Das Polymer hat eine Glasübergangstemperatur von 19 °C und eine Partikelgröße von 121 nm.

Die Styrol-Butadien-Copolymer-Dispersion enthält ein Styrol-Butadien-Copolymer. Die Dispersion hat einen Feststoffgehalt von 50 Gew.-%. Als stabilisierende Hilfsmonomere sind Methacrylsäure und Acrylamid jeweils in einer Menge von weniger als 2 Gew.% in Bezug auf die gesamte Polymermenge, gerechnet fest, verwendet. Das Polymer hat eine Glasübergangstemperatur von -11 °C und eine Partikelgröße von 175 nm.

Die Polyurethan-Dispersion enthält Polyurethan. Die Dispersion hat einen Feststoffgehalt von 39,8 Gew.-%. Das Polymer hat eine Glasübergangstemperatur von -35 °C und eine Partikelgröße von 100 nm.

Sofern nicht anders angegeben wurden in allen Beispielen weiterhin folgende Inhaltsstoffe zugesetzt:
- Fettalkylethersulfat, Na-Salz (C12/14+2EO-sulfat, Na-Salz) (grenzflächenaktive Substanz) in einer Menge von 0,05 Gew.-% bezogen auf das Gesamtgewicht des Hybridschaums;
- Polycarboxylatether in einer Menge von 0,14% Gew.-% bezogen auf das Gesamtgewicht des Hybridschaums;
- Celluloseether enthalten in einer Menge von 0,02 Gew.-% bezogen auf das Gesamtgewicht des Hybridschaums.

Die Biegezug- und Druckfestigkeit wurde gemäß DIN_EN_1015-11 am ausgehärteten Prisma bestimmt, wobei die Aushärtezeit gemäß DIN_EN_1015-18 Tabelle 1 verwendet wurde.

Die Haftzugwerte und Versagensart wurden auf Betonplatten nach ETAG 004 6.1.4.1 bestimmt.

Haftzugwerte auf Betonplatten nach ETAG 004 6.1.4.1
a) Bedingung: 28 d unter Standardbedingungen (23 °C / 50 % rel. Luftfeuchte) ("28d" in Tabelle):
   Grenzwert laut Norm: >=0,25 N/mm²
   Bedingung: 28 d unter Standardbedingungen (23 °C / 50 % rel. Luftfeuchte) + 48 h Eintauchen in Wasser + 2 h, 23 °C / 50 % rel. Luftfeuchte ("28d +2d nass" in Tabelle) Grenzwert laut Norm: >=0,08 N/mm²
b) Bedingung: 28 d unter Standardbedingungen (23 °C / 50 % rel. Luftfeuchte) + 48 h Eintauchen in Wasser + 7 d, 23 °C / 50 % rel. Luftfeuchte ("28d + 2d nass +7d" in Tabelle):
   Grenzwert laut Norm: >=0,25 N/mm²

Die Frischrohdichte (auch Nassdichte) wurde gemäß DIN_EN_1015-16 bestimmt. Nach 29 Minuten wurde nochmals 15 Sekunden gerührt und nach weiteren 45 Sekunden die Frischrohdichte bei 30 Minuten bestimmt. Die Trockendichte wurde nach EN1015-10 "Bestimmung der Trockenrohdichten von Festmörteln" bestimmt mit der Abweichung, dass nicht auf ein Ausbreitmaß nach 1015-2 Tabelle 2 eingestellt wurde.

### Haftzugwerte auf Betonplatten nach ETAG 004 6.1.4.1

| | Trockendichte (kg/L) | Zugfestigkeit 7d (N/mm²) | Zugfestigkeit 28d (N/mm²) | Zugfestigkeit 28d +2d nass (N/mm²) | Zugfestigkeit 28d +2d nass +7d (N/mm²) |
|---|---|---|---|---|---|
| Ref.-Bsp. 1 | 1,38 | 0,621 | 0,661 | 0,435 | 0,832 |
| Ref.-Bsp. 2 | 0,56 | - (nicht messbar) | - (nicht messbar) | - (nicht messbar) | - (nicht messbar) |
| Bsp. 1 | 0,79 | 0,28 | 0,334 | 0,456 | 0,639 |
| Bsp. 2 | 0,84 | 0,57 | 0,646 | 0,435 | 0,574 |
| Bsp. 3 | 0,71 | 0,129 | 0,132 | 0,3 | 0,353 |
| Bsp. 4 | 0,71 | 0,169 | 0,189 | 0,391 | 0,749 |

### Variation Zement/Kalksteinmehl - Haftzugwerte auf Betonplatten nach ETAG 004 6.1.4.1

| | Trockendichte (kg/L) | Zugfestigkeit 7d (N/mm²) | Zugfestigkeit 28d (N/mm²) | Zugfestigkeit 28d +2d nass (N/mm²) | Zugfestigkeit 28d +2d nass +7d (N/mm²) |
|---|---|---|---|---|---|
| Ref.-Bsp. 1 | 1,38 | 0,621 | 0,661 | 0,435 | 0,832 |
| Bsp. 2 | 0,84 | 0,57 | 0,646 | 0,435 | 0,574 |
| Bsp. 4 | 0,71 | 0,169 | 0,189 | 0,391 | 0,749 |
| Bsp. 5 | 0,74 | 0,459 | 0,806 | 0,351 | 0,944 |
| Bsp. 6 | 0,76 | 0,453 | 0,47 | 0,332 | 0,746 |
| Bsp. 7 | 0,79 | 0,663 | 0,734 | 0,55 | 0,866 |
| Bsp. 8 | 0,79 | 0,343 | 0,346 | 0,379 | 0,639 |

### Versagensart bei den Haftzugmessungen:

| | Trockendichte (kg/L) | Zugfes-tigkeit 7d (N/mm²) | Versagensart | Zugfestigkeit 28d (N/mm²) | Versagensart | Zugfes-tigkeit 28d+2d nass(N/ mm²) | Versagensart | Zugfestigkeit 28d+2d nass +7d N/mm²) | Versagensart |
|---|---|---|---|---|---|---|---|---|---|
| Ref.-Bsp. 1 | 1,38 | 0,621 | adhäsiv (0%), kohäsiv (100%) | 0,661 | adhäsiv (0%), kohäsiv (100%) | 0,435 | adhäsiv (60%), kohäsiv (40%) | 0,832 | adhäsiv (30%), kohäsiv (70%) |
| Ref.-Bsp. 2 | 0,56 | - | adhäsiv (-%), kohäsiv (-%) | - | - | - | - | - | - |
| Bsp. 1 | 0,79 | 0,28 | adhäsiv (0%), kohäsiv (100%) | 0,334 | adhäsiv (0%), kohäsiv (100%) | 0,456 | adhäsiv (5%), kohäsiv (95%) | 0,639 | adhäsiv (5%), kohäsiv (95%) |
| Bsp. 2 | 0,84 | 0,57 | adhäsiv (0%), kohäsiv (100%) | 0,646 | adhäsiv (10%), kohäsiv (90%) | 0,435 | adhäsiv (5%), kohäsiv (95%) | 0,574 | adhäsiv (8%), kohäsiv (92%) |
| Bsp. 3 | 0,71 | 0,129 | adhäsiv (0%), kohäsiv (100%) | 0,132 | adhäsiv (3%), kohäsiv (97%) | 0,3 | adhäsiv (10%), kohäsiv (90%) | 0,353 | adhäsiv (10%), cohesiv (90%) |
| Bsp. 4 | 0,71 | 0,169 | adhäsiv (10%), kohäsiv (90%) | 0,189 | adhäsiv (0%), kohäsiv (100%) | 0,391 | adhäsiv (0%), kohäsiv (100%) | 0,749 | adhäsiv (35%), kohäsiv (65%) |
| Bsp. 5 | 0,74 | 0,459 | adhäsiv (15%), kohäsiv (85%) | 0,806 | adhäsiv (10%), kohäsiv (90%) | 0,351 | adhäsiv (0%), kohäsiv (100%) | 0,944 | adhäsiv (0%), kohäsiv (100%) |
| Bsp. 6 | 0,76 | 0,453 | adhäsiv (0%), kohäsiv (100%) | 0,47 | adhäsiv (0%), kohäsiv (100%) | 0,332 | adhäsiv (0%), kohäsiv (100%) | 0,746 | adhäsiv (0%), kohäsiv (100%) |
| Bsp. 7 | 0,79 | 0,663 | adhäsiv (0%), kohäsiv (100%) | 0,734 | adhäsiv (0%), kohäsiv (100%) | 0,55 | adhäsiv (5%), kohäsiv (95%) | 0,866 | adhäsiv (3%), kohäsiv (97%) |
| Bsp.8 | 0,79 | 0,343 | adhäsiv (4%), kohäsiv (96%) | 0,346 | adhäsiv (0%), kohäsiv (100%) | 0,379 | adhäsiv (0%), kohäsiv (100%) | 0,639 | adhäsiv (5%), kohäsiv (95%) |

### Biegezug- und Druckfestigkeiten Mörtelprismen (7d) nach DIN EN998-1

| | Biegezugfestigkeit bei Trocken-Dichte von 0,6 kg/L (N/mm²) | Druckfestigkeit bei Trocken-Dichte von 0,6 kg/L (N/mm²) | Verhältnis Biegezugfestigkeit/ Druckfestigkeit bei Trocken-Dichte von 0,6 kg/L (N/mm²) |
|---|---|---|---|
| Ref.-Bsp. 2 | 0,60 | 3,15 | 0,19 |
| Beispiel 9 | 0,89 | 2,18 | 0,41 |
| Beispiel 3 | 0,83 | 3,50 | 0,24 |
| Beispiel 10 | 1,07 | 3,79 | 0,28 |
| Beispiel 1 | 0,89 | 3,87 | 0,23 |
| Beispiel 11 | 0,78 | 3,57 | 0,22 |
| Beispiel 2 | 1,21 | 3,99 | 0,30 |
| Beispiel 4 | 0,99 | 4,43 | 0,22 |

### Biegezug- und Druckfestigkeiten (28d) Mörtelprismen nach DIN EN998-1

| | Biegezugfestigkeit bei Trocken-Dichte von 0,6 kg/L (N/mm²) | Druckfestigkeit bei Trocken-Dichte von 0,6 kg/L (N/mm²) | Verhältnis Biegezugfestigkeit/ Druckfestigkeit bei Trocken-Dichte von 0,6 kg/L (N/mm²) |
|---|---|---|---|
| Ref.-Bsp. 2 | 0,87 | 2,96 | 0,29 |
| Beispiel 3 | 1,28 | 4,20 | 0,30 |
| Beispiel 1 | 1,46 | 4,28 | 0,34 |
| Beispiel 2 | 1,71 | 5,1 | 0,34 |
| Beispiel 4 | 1,85 | 5,44 | 0,34 |

## Patentansprüche

1. Ein Hybridschaum enthaltend
• mindestens ein mineralisches Bindemittel;
• mindestens ein Styrol-Acrylat-Copolymer;
• mindestens eine grenzflächenaktive Substanz ausgewählt aus der Gruppe bestehend aus C₈-C₁₈-Alkylsulfaten, C₈-C₁₈-Alkylethersulfaten, C₈-C₁₈-Alkylsulfonaten, C₈-C₁₈-Alkylbenzolsulfonaten, C₈-C₁₈-α-Olefinsulfonaten, C₈-C₁₈-Sulfosuccinaten, α-Sulfo-C₈-C₁₈-fettsäuredisalzen, C₈-C₁₈-Fettsäuresalzen, C₈-C₁₈-Fettalkoholethoxylaten, Blockcopolymeren aus Ethylenoxid und Propylenoxid, C₈-C₁₈-Alkylpolyglycosiden und Mischungen daraus;
• mindestens einen Verdicker;
• optional mindestens ein weiteres Additiv; und
• Wasser.

2. Der Hybridschaum gemäß Anspruch 1, wobei das mineralische Bindemittel ein Zement, Kalkhydrat, Gips oder eine Mischung daraus ist.

3. Der Hybridschaum gemäß einem der Ansprüche 1 oder 2, wobei der mindestens eine Verdicker ausgewählt ist aus der Gruppe bestehend aus Celluloseethern, Stärkeethern und Polyacrylamiden, und vorzugsweise ein Celluloseether ist.

4. Der Hybridschaum gemäß einem der Ansprüche 1 bis 3, wobei das optional mindestens eine Additiv ausgewählt ist aus der Gruppe bestehend aus pH-Modifikatoren, Füllstoffen, Beschleunigern, Verzögerern, Rheologie-Modifizierern, Superplastifizierungsmitteln, Tensiden, Hydrophobierungsmitteln und Mischungen daraus.

5. Der Hybridschaum gemäß einem der Ansprüche 1 bis 4, wobei die Menge des mineralischen Bindemittels 10 bis 98 Gew.-%, bevorzugt 25 bis 75 Gew.-%, bezogen auf das Gesamtgewicht des Hybridschaums beträgt, und die Menge des Styrol-Acrylat-Copolymers bis 25 Gew.-%, bevorzugt 1 bis 15 Gew.-%, bezogen auf das Gesamtgewicht des Hybridschaums beträgt.

6. Ein Verfahren zur Herstellung eines Hybridschaums umfassend
(1) Herstellen einer Mischung enthaltend
• mindestens ein mineralisches Bindemittel;
• mindestens ein Styrol-Acrylat-Copolymer
• optional mindestens ein Additiv; und
• Wasser:
(2) Mischen der in Schritt (1) erhaltenen Mischung mit einem wässrigen Schaum enthaltend Wasser und mindestens eine grenzflächenaktive Substanz ausgewählt aus der Gruppe bestehend aus C₈-C₁₈-Alkylsulfaten, C₈-C₁₈-Alkylethersulfaten, C₈-C₁₈-Alkylsulfonaten, C₈-C₁₈-Alkylbenzolsulfonaten, C₈-C₁₈-a-Olefinsulfonaten, C₈-C₁₈-Sulfosuccinaten, α-Sulfo-C₈-C₁₈-fettsäuredisalzen, C₈-C₁₈-Fettsäuresa!zen, C₈-C₁₈-Fettalkoholethoxylaten, Blockcopolymeren aus Ethylenoxid und Propylenoxid, C₈-C₁₈-Alkylpolyglycosiden und Mischungen daraus; ; und
(3) optional Aushärten des in Schritt (2) erhaltenen Hybridschaums.

7. Das Verfahren gemäß Anspruch 6, wobei das mineralische Bindemittel ein Zement, Kalkhydrat, Gips oder eine Mischung daraus ist.

8. Das Verfahren gemäß einem der Ansprüche 6 bis 7, wobei der wässrige Schaum weiterhin einen Verdicker enthält.

9. Das Verfahren gemäß Anspruch 8, wobei der mindestens eine Verdicker ausgewählt ist aus der Gruppe bestehend aus Celluloseethern, Stärkeethern und Polyacrylamiden, und vorzugsweise ein Celluloseether ist.

10. Das Verfahren gemäß einem der Ansprüche 6 bis 9, wobei das optional mindestens eine Additiv ausgewählt ist aus der Gruppe bestehend aus pH-Modifikatoren, Füllstoffen, Beschleunigern, Verzögerern, Rheologie-Modifizierern, Superplastifizierungsmitteln, Tensiden, Hydrophobierungsmitteln und Mischungen daraus.

11. Verwendung des Hybridschaums gemäß einem der Ansprüche 1 bis 5 zum Kleben, Füllen und/oder Dämmen.

## Claims

1. A hybrid foam comprising
• at least one mineral binder;
• at least one styrene-acrylate copolymer;
• at least one surface-active substance selected from the group consisting of C₈-C₁₈-alkyl sulfates, C₈-C₁₈-alkyl ether sulfates, C₈-C₁₈-alkyl sulfonates, C₈-C₁₈-alkylbenzene sulfonates, C₈-C₁₈-ex-olefin sulfonates, C₈-C₁₈-sulfosuccinates, α-sulfo-C₈-C₁₈-fatty acids disalts, C₈-C₁₈-fatty acid salts, C₈-C₁₈-fatty alcohol ethoxylates, block copolymers of ethylene oxide and propylene oxide, C₈-C₁₈-alkyl polyglycosides and mixtures thereof;
• at least one thickener;
• optionally at least one further additive; and
• water.

2. The hybrid foam according to claim 1, wherein the mineral binder is a cement, slaked lime, gypsum or a mixture thereof.

3. The hybrid foam according to either of claims 1 or 2, wherein the at least one thickener is selected from the group consisting of cellulose ethers, starch ethers and polyacrylamides and is preferably a cellulose ether.

4. The hybrid foam according to any of claims 1 to 3, wherein the optional at least one additive is selected from the group consisting of pH modifiers, fillers, accelerators, retarders, rheology modifiers, superplasticizers, surfactants, hydrophobizing agents and mixtures thereof.

5. The hybrid foam according to any of claims 1 to 4, wherein the amount of the mineral binder is 10% to 98% by weight, preferably 25% to 75% by weight, based on the total weight of the hybrid foam and the amount of the styrene-acrylate copolymer is up to 25% by weight, preferably 1% to 15% by weight, based on the total weight of the hybrid foam.

6. A process for producing a hybrid foam comprising
(1) producing a mixture comprising
• at least one mineral binder;
• at least styrene-acrylate copolymer;
• optionally at least one additive; and
• water;
(2) mixing the mixture obtained in step (1) with an aqueous foam comprising water and at least one surface-active substance selected from the group consisting of C₈-C₁₈-alkyl sulfates, C₈-C₁₈-alkyl ether sulfates, C₈-C₁₈-alkyl sulfonates, C₈-C₁₈-alkylbenzene sulfonates, C₈-C₁₈-a-olefin sulfonates, C₈-C₁₈-sulfosuccinates, α-sulfo-C₈-C₁₈-fatty acids disalts, C₈-C₁₈-fatty acid salts, C₈-C₁₈-fatty alcohol ethoxylates, block copolymers of ethylene oxide and propylene oxide, C₈-C₁₈-alkyl polyglycosides and mixtures thereof; and
(3) optionally curing the hybrid foam obtained in step (2) .

7. The process according to claim 6, wherein the mineral binder is a cement, slaked lime, gypsum or a mixture thereof.

8. The process according to either of claims 6 to 7, wherein the aqueous foam further comprises a thickener.

9. The process according to claim 8, wherein the at least one thickener is selected from the group consisting of cellulose ethers, starch ethers and polyacrylamides and is preferably a cellulose ether.

10. The process according to any of claims 6 to 9, wherein the optional at least one additive is selected from the group consisting of pH modifiers, fillers, accelerators, retarders, rheology modifiers, superplasticizers, surfactants, hydrophobizing agents and mixtures thereof.

11. The use of the hybrid foam according to any of claims 1 to 5 for bonding, filling and/or insulating.

## Revendications

1. Mousse hybride contenant
• au moins un liant minéral ;
• au moins un copolymère styrène-acrylate ;
• au moins une substance tensioactive choisie dans le groupe consistant en les alkylsulfates en C₈ à C₁₈, les alkyléthersulfates en C₈ à C₁₈, les alkylsulfonates en C₈ à C₁₈, les alkylbenzènesulfonates en C₈ à C₁₈, les α-oléfinesulfonates en C₈ à C₁₈, les sulfosuccinates en C₈ à C₁₈, les sels doubles d'a-sulfo-acides gras en C₈ à C₁₈, les sels d'acides gras en C₈ à C₁₈, les alcools gras en C₈ à C₁₈ éthoxylés, les copolymères à blocs d'oxyde d'éthylène et d'oxyde de propylène, les (alkyle en C₈ à C₁₈) polyglycosides et les mélanges de ceux-ci ;
• au moins un épaississant ;
• éventuellement au moins un autre additif ; et
• de l'eau.

2. Mousse hybride selon la revendication 1, dans laquelle le liant minéral est un ciment, une chaux hydratée, un plâtre ou un mélange de ceux-ci.

3. Mousse hybride selon l'une des revendications 1 ou 2, dans laquelle l'au moins un épaississant est choisi dans le groupe consistant en les éthers de cellulose, les éthers d'amidon et les polyacrylamides, et est de préférence un éther de cellulose.

4. Mousse hybride selon l'une des revendications 1 à 3, dans laquelle l'éventuel au moins un additif est choisi dans le groupe consistant en les modifiants de pH, les charges, les accélérateurs, les retardateurs, les agents modifiant la rhéologie, les superplastifiants, les tensioactifs, les agents d'hydrophobisation et les mélanges de ceux-ci.

5. Mousse hybride selon l'une des revendications 1 à 4, dans laquelle la quantité du liant minéral est de 10 à 98 % en poids, de préférence de 25 à 75 % en poids, par rapport au poids total de la mousse hybride, et la quantité du copolymère styrène-acrylate va jusqu'à 25 % en poids, et est de préférence de 1 à 15 % en poids, par rapport au poids total de la mousse hybride.

6. Procédé de fabrication d'une mousse hybride comprenant
(1) la fabrication d'un mélange contenant
• au moins un liant minéral ;
• au moins un copolymère styrène-acrylate ;
• éventuellement au moins un additif ; et
• de l'eau ;
(2) le mélange du mélange obtenu dans l'étape (1) avec une mousse aqueuse contenant de l'eau et au moins une substance tensioactive choisie dans le groupe consistant en les alkylsulfates en C₈ à C₁₈, les alkyléthersulfates en C₈ à C₁₈, les alkylsulfonates en C₈ à C₁₈, les alkylbenzènesulfonates en C₈ à C₁₈, les α-oléfinesulfonates en C₈ à C₁₈, les sulfosuccinates en C₈ à C₁₈, les sels doubles d'α-sulfo-acides gras en C₈ à C₁₈, les sels d'acides gras en C₈ à C₁₈, les alcools gras en C₈ à C₁₈ éthoxylés, les copolymères à blocs d'oxyde d'éthylène et d'oxyde de propylène, les (alkyle en C₈ à C₁₈) polyglycosides et les mélanges de ceux-ci ; et
(3) éventuellement le durcissement de la mousse hybride obtenue dans l'étape (2).

7. Procédé selon la revendication 6, dans lequel le liant minéral est un ciment, une chaux hydratée, un plâtre ou un mélange de ceux-ci.

8. Procédé selon l'une des revendications 6 à 7, dans lequel la mousse aqueuse contient en outre un épaississant.

9. Procédé selon la revendication 8, dans lequel l'au moins un épaississant est choisi dans le groupe consistant en les éthers de cellulose, les éthers d'amidon et les polyacrylamides, et est de préférence un éther de cellulose.

10. Procédé selon l'une des revendications 6 à 9, dans lequel l'éventuel au moins un additif est choisi dans le groupe consistant en les modifiants de pH, les charges, les accélérateurs, les retardateurs, les agents modifiant la rhéologie, les superplastifiants, les tensioactifs, les agents d'hydrophobisation et les mélanges de ceux-ci.

11. Utilisation de la mousse hybride selon l'une des revendications 1 à 5 pour le collage, le remplissage et/ou l'isolation.
